# EUROPÄISCHE PATENTSCHRIFT

(11) **EP 3 799 771 B1**
(45) Veröffentlichungstag und Bekanntmachung des Hinweises auf die Patenterteilung: **03.07.2024**
(21) Anmeldenummer: 19200818.3
(22) Anmeldetag: 01.10.2019
(51) Int. Cl.: A47J 36/32, A47J 43/046

(54) **KÜCHENMASCHINE ZUR STEUERUNG EINES ANDEREN HAUSHALTSGERÄTS**
FOOD PROCESSOR FOR CONTROLLING ANOTHER HOUSEHOLD APPLIANCE
MACHINE DE CUISINE PERMETTANT DE COMMANDER UN AUTRE APPAREIL ÉLECTROMÉNAGER

(43) Veröffentlichungstag der Anmeldung: 07.04.2021
(73) Patentinhaber: Vorwerk & Co. Interholding GmbH, 42270 Wuppertal (DE)
(72) Erfinder: Stein, Matthias, 45472 Mülheim an der Ruhr (DE); Caballero, Marcelo, 8820 Wädenswil (CH); Ludwig, Matthias, 40822 Mettmann (DE); Bruns, Felix, 44803 Bochum (DE)
(74) Vertreter: Gille Hrabal Partnerschaftsgesellschaft mbB Patentanwälte

(56) Entgegenhaltungen:
- EP-A1- 3 415 061
- DE-A1-102011 007 427
- DE-A1-102014 119 315

## Beschreibung

Die Erfindung betrifft eine Küchenmaschine zum Zubereiten einer Speise in einem Speisenzubereitungsraum. Unter Zubereitung einer Speise im Sinne der vorliegenden Erfindung wird auch die Zubereitung eines Getränks verstanden. Die Erfindung betrifft außerdem die Zubereitung von Speisen.

Es ist eine Küchenmaschine Thermomix^{®} für ein teilautomatisiertes Zubereiten einer Speise bekannt, die auf in einem elektronischen Speicher gespeicherte Rezepte zur Zubereitung einer Speise zugreifen kann. Zur Zubereitung einer Speise folgt ein Benutzer sukzessive den Rezeptschritten in der von einem ausgewählten Rezept vorgegebenen Reihenfolge. Im Unterschied zum Kochen nach einem Kochbuch muss ein Benutzer aber nicht zwingend jeden Betriebsparameter der Küchenmaschine manuell einstellen. Stattdessen ist es möglich, dass der Thermomix^{®} automatisiert Betriebsparameter im Rahmen eines Rezeptschritts einstellt. So kann beispielsweise als Betriebsparameter eine Temperatur in einem als Speisenzubereitungsraum dienenden Gefäß des Thermomix automatisiert eingestellt werden. Es kann beispielsweise als Betriebsparameter eine Rührgeschwindigkeit des Mischwerkzeugs der Küchenmaschine automatisiert eingestellt werden. Es kann ein Zeitraum als Betriebsparameter für ein Erhitzen oder Rühren automatisiert eingestellt werden. Auch eine Aktivierung einer Waage kann ein Betriebsparameter sein, die automatisiert eingestellt wird, sobald eine Zutat in das Kochgefäß eingefüllt werden soll. Da zumindest einige Betriebsparameter automatisiert eingestellt werden können, handelt es sich um eine Küchenmaschine für ein teilautomatisiertes Zubereiten einer Speise.

Soll bei der Küchenmaschine Thermomix^{®} eine Waage aktiviert werden, so kann der Benutzer diese Funktion manuell aktvieren. Es wird im Anschluss an die Aktivierung eine damit verknüpfte grafische Benutzeroberfläche (user interface) auf dem Bildschirm der Küchenmaschine Thermomix^{®} dargestellt. Die mit der Waage verknüpfte grafische Benutzeroberfläche kann immer nur für die Waage der Küchenmaschine Thermomix^{®} verwendet werden. Das für die Waage verwendete Steuerprogramm kommuniziert immer nur mit der in der Küchenmaschine vorhandenen Waage.

Soll bei der Küchenmaschine Thermomix^{®} eine Rührgeschwindigkeit für das Rührwerkzeug eingestellt werden, so kann der Benutzer eine Rührgeschwindigkeit manuell auswählen und das Rühren manuell aktvieren. Es wird dann eine damit verknüpfte grafische Benutzeroberfläche auf dem Bildschirm der Küchenmaschine Thermomix^{®} dargestellt und das Rührwerkzeug mit der gewählten Rührgeschwindigkeit gedreht. Diese mit dem Rührwerkzeug verknüpfte grafische Benutzeroberfläche kann immer nur für das Mischwerkzeug der Küchenmaschine Thermomix^{®} verwendet werden.

Entsprechendes gilt für weitere Benutzeroberflächen und Einrichtungen der Küchenmaschine Thermomix^{®}. Die Küchenmaschine Thermomix^{®} ist nicht dafür bestimmt und geeignet, an diesen Verknüpfungen oder den Benutzeroberflächen etwas zu ändern oder mit geringem technischen Aufwand etwas ändern zu können. Solche Verknüpfungen und Benutzeroberflächen, die nicht für Änderungen bestimmt und geeignet sind, und die dazu dienen, die Küchenmaschine zu steuern und zu bedienen, werden nachfolgend nativ genannt.

Es ist ein Haushaltsgerät HestanCue^{™} bekannt, welches ein Kochfeld und eine Bratpfanne umfasst. Mit Hilfe des Haushaltsgeräts kann eine Speise zubereitet werden, indem ein Benutzer gemäß Rezeptschritten angeleitet wird, wie eine Speise zubereitet wird. Die Anweisungen werden über das Display eines Mobiltelefons dargestellt. Das Haushaltsgerät HestanCue^{™} kann im Rahmen der Zubereitung einer Speise Temperatur und Kochdauer automatisch steuern. Das Haushaltsgerät HestanCue^{™} ist also ebenfalls eine Küchenmaschine, mit der halbautomatisiert eine Speise zubereitet werden kann.

Ein Verfahren und eine Steuereinheit zur Überwachung eines Herstellungsprozesses einer Nahrungsmittelmasse ist aus der Druckschrift DE 10 2016 219 972 A1 bekannt. In der Druckschrift EP 3 252 729 A1 wird ein Verfahren zur Unterstützung einer Speisenzubereitung beschrieben. Außerdem ist hieraus ein Assistenzsystem bekannt. Die Druckschrift EP 2 901 903 A1 offenbart ein Verfahren zum Betrieb einer Küchenmaschine sowie eine Küchenmaschine. Weitere Küchenmaschinen nach dem Oberbegriff von Anspruch 1 sind bekannt aus DE102011007427, EP3415061 und DE102014119315.

Es ist Aufgabe der Erfindung, eine weiterentwickelte Küchenmaschine bereitzustellen. Zur Lösung der Aufgabe dient eine Küchenmaschine gemäß Anspruch 1. Ein Verfahren zur Zubereitung einer Speise umfasst die Merkmale des letzten Anspruchs. Vorteilhafte Ausführungsformen ergeben sich aus den Unteransprüchen.

Zur Lösung der Aufgabe dient eine Küchenmaschine für eine Zubereitung einer Speise, gemäß dem Anspruch 1.

Eine Küchenmaschine ist ein Gerät, welches typischerweise in einer Küche eingesetzt wird. Eine Küche gehört zu den Räumen eines Haushalts, in denen sich Personen besonders häufig aufhalten, wenn Haushaltstätigkeiten durchgeführt werden. In einer Küche werden daher besonders viele Haushaltsgeräte eingesetzt. Daher ist eine Küchenmaschine ein besonders geeignetes Gerät, um mithilfe der Küchenmaschine zentral auch andere Haushaltsgeräte zu bedienen und zu steuern. Zu den Haushaltsgeräten sind auch Geräte zu zählen, die in einem zugehörigen Garten eingesetzt werden können und/oder sollen wie beispielsweise ein Gasgrill.

Die Küchenmaschine umfasst einen Speisenzubereitungsraum. Der Speisenzubereitungsraum kann ein vollständig geschlossener Raum sein. Der Speisenzubereitungsraum kann Öffnungen aufweisen, über die beispielsweise Zutaten hinzugefügt werden können. Der Speisenzubereitungsraum kann ein Gefäß sein. Es kann ein Deckel für das Gefäß vorhanden sein. Der Deckel kann eine Öffnung aufweisen, um über die Öffnung im Deckel Zutaten in das Gefäß einfüllen zu können. Es kann ein Verschluss vorhanden sein, mit dem die Öffnung im Deckel verschlossen werden kann. Der Verschluss kann aus einem transparenten Material bestehen, um jederzeit eine Sicht in das Gefäß hinein zu ermöglichen. Der Verschluss kann als Gefäß ausgestaltet sein, um den Verschluss zur Dosierung von Zutaten nutzen zu können.

Die Küchenmaschine kann einen Schließmechanismus umfassen, um den vorgenannten Deckel unlösbar mit dem Gefäß zu verbinden. Die Küchenmaschine kann einen Motor umfassen, mit dem der Schließmechanismus geöffnet und geschlossen werden kann. Die Küchenmaschine kann ein Steuerprogramm umfassen, um den Schließmechanismus zu steuern. Die Küchenmaschine kann einen Kommunikationskanal für den Motor des Schließmechanismus umfassen, um den Betrieb des Motors mithilfe des Steuerprogramms für den Schließmechanismus zu steuern und damit das Öffnen und Schließen des Schließmechanismus.

Die Küchenmaschine kann ein oder mehreren Einrichtungen für die Zubereitung einer Speise umfassen. Als Einrichtung für die Zubereitung einer Speise kann eine Heizeinrichtung vorgesehen sein, mit der der Speisenzubereitungsraum erwärmt werden kann. Die Küchenmaschine kann ein Steuerprogramm umfassen, mit der das Erwärmen des Speisenzubereitungsraum gesteuert werden kann. Die Heizeinrichtung kann eine elektrische Widerstandsheizung umfassen, um Hitze erzeugen zu können. Die Heizeinrichtung kann einen Temperatursensor umfassen, um Temperaturen erfassen, anzeigen und/oder steuern zu können.

Als Einrichtung für die Zubereitung einer Speise kann ein durch einen Motor angetriebenes Rührwerkzeug vorgesehen sein, mit der eine Speise oder Zutaten für eine Speise in dem Speisenzubereitungsraum gerührt und/oder zerkleinert werden können. Die Küchenmaschine kann ein Steuerprogramm umfassen, mit der das Rühren und/oder Zerkleinern gesteuert werden kann.

Als Einrichtung für die Zubereitung einer Speise kann eine Waage vorgesehen sein, mit der das Gewicht einer in den Speisenzubereitungsraum hineingebrachten Zutat oder Speise gewogen werden kann. Die Küchenmaschine kann ein Steuerprogramm umfassen, mit der die Waage und damit das Wiegen gesteuert werden kann.

Als Einrichtung für die Zubereitung einer Speise kann ein optischer Sensor vorgesehen sein, mit dem eine in den Speisenzubereitungsraum hineingebrachte Zutat optisch überwacht werden kann. Die Küchenmaschine kann ein Steuerprogramm umfassen, mit der der optische Sensor und damit das optische Überwachen gesteuert werden kann.

Die Küchenmaschine umfasst wenigstens eine Schnittstelle für ein Verbinden der Küchenmaschine mit einem anderen Haushaltsgerät. Durch das Verbinden der Küchenmaschine mit einem anderen Haushaltsgerät können Daten zwischen der Küchenmaschine und dem anderen Haushaltsgerät ausgetauscht werden. Als Schnittstelle ist eine drahtlose Schnittstelle zu bevorzugen. Eine Datenübertragung kann also beispielsweise über Wifi oder Bluetooth erfolgen. Durch die Schnittstelle können Kommunikationskanäle zu anderen Haushaltsgeräten oder zu Einrichtungen von anderen Haushaltsgeräten bereitgestellt werden. Es wird dadurch die Möglichkeit geschaffen, dass die Küchenmaschine mit ein oder mehreren anderen Küchengeräten Daten austauscht, also kommuniziert.

Die Küchenmaschine umfasst eine Benutzeroberflächeneinheit für ein Bereithalten von ein oder mehreren Benutzeroberflächen. Durch die Benutzeroberflächeneinheit können also ein oder mehrere Benutzeroberflächen bereitgehalten werden. Die Benutzeroberflächeneinheit ermöglicht es, mit geringem technischen Aufwand ein oder mehrere Benutzeroberflächen hinzuzufügen oder zu entfernen und zwar unabhängig von anderen Einheiten der Küchenmaschine. Benutzeroberflächen können also auch ausgetauscht werden. Durch das Vorsehen der Benutzeroberflächeneinheit im Sinne der vorliegenden Erfindung können also Benutzeroberflächen bereitgestellt und durch die Küchenmaschine genutzt werden, die mit einem Steuerprogramm sowie einem Kommunikationskanal der Küchenmaschine nicht dauerhaft fest verknüpft sein müssen.

Die Küchenmaschine umfasst eine Steuereinheit für ein Bereithalten von ein oder mehreren Steuerprogrammen. Durch die Steuereinheit können also ein oder mehrere Steuerprogramme bereitgehalten werden. Die Steuereinheit ermöglicht es, ein oder mehrere Steuerprogramme mit geringem technischen Aufwand hinzuzufügen oder zu entfernen und zwar unabhängig von anderen Einheiten der Küchenmaschine. Steuerprogramme können also auch ausgetauscht werden. Durch das Vorsehen der Steuereinheit im Sinne der vorliegenden Erfindung können also Steuerprogramme bereitgestellt und genutzt werden, die nicht dauerhaft mit einer Benutzeroberfläche der Küchenmaschine sowie einem Kommunikationskanal der Küchenmaschine verknüpft sein müssen. Es kann daher eine erste Benutzeroberfläche mit einem ersten Steuerprogramm verknüpft werden oder verknüpft sein. Die erste Benutzeroberfläche kann außerdem mit einem zweiten Steuerprogramm verknüpft werden oder verknüpft sein. Das erste Steuerprogramm kann zur Steuerung eines ersten anderen Haushaltsgeräts dienen. Das zweite Steuerprogramm kann zur Steuerung eines zweiten Haushaltsgeräts dienen. Dies kann mit geringem technischen Aufwand geschehen.

Mit geringem technischen Aufwand meint, dass der technische Aufwand, so zum Beispiel ein Programmieraufwand, geringer ist im Vergleich zu dem Aufwand, der im Fall der Küchenmaschine Thermomix^{®} betrieben werden müsste, falls im Fall der Küchenmaschine Thermomix^{®} an nativen Benutzeroberflächen, Verknüpfungen oder dem Steuerprogramm etwas geändert werden soll.

Die Küchenmaschine umfasst eine Kommunikationseinheit für ein Bereithalten von ein oder mehreren Kommunikationskanälen. Durch die Kommunikationseinheit können also ein oder mehrere Kommunikationskanäle bereitgehalten werden. Ein Kommunikationskanal ermöglicht einen Austausch von Daten zwischen der Küchenmaschine und einem anderen ausgewählten Haushaltsgerät, welches dem Kommunikationskanal zugeordnet ist. Die Kommunikationseinheit ermöglicht es, ein oder mehrere Kommunikationskanäle hinzuzufügen oder zu entfernen und zwar unabhängig von anderen Einheiten der Küchenmaschine. Kommunikationskanäle können also auch ausgetauscht werden. Durch das Vorsehen der Kommunikationseinheit im Sinne der vorliegenden Erfindung können also Kommunikationskanäle bereitgestellt und genutzt werden, die nicht quasi untrennbar mit einer Benutzeroberfläche sowie einem Steuerprogramm der Küchenmaschine verknüpft sind. Ein erster Kommunikationskanal kann mit einem ersten Steuerprogramm verknüpft werden oder verknüpft sein. Das erste Steuerprogramm dient dann zur Steuerung des ersten anderen Haushaltsgeräts. Der erste Kommunikationskanal kann eine Kommunikation zwischen der Küchenmaschine und dem ersten anderen Haushaltsgerät ermöglichen. Es können dann also zum Beispiel Daten zwischen der Küchenmaschine und dem ersten anderen Haushaltsgerät ausgetauscht werden, um das erste andere Haushaltsgerät zu steuern und/oder zu bedienen und zwar mithilfe der Küchenmaschine. Ein zweiter Kommunikationskanal kann mit einem zweiten Steuerprogramm verknüpft werden oder verknüpft sein. Das zweite Steuerprogramm dient dann zur Steuerung des zweiten anderen Haushaltsgeräts. Der zweite Kommunikationskanal kann eine Kommunikation zwischen der Küchenmaschine und dem zweiten anderen Haushaltsgerät ermöglichen. Es können dann also zum Beispiel Daten zwischen der Küchenmaschine und dem zweiten anderen Haushaltsgerät ausgetauscht werden. Das zweite Haushaltsgerät kann dann mithilfe der Küchenmaschine bedient und/oder gesteuert werden.

Durch die Benutzeroberflächen, die durch die Küchenmaschine bereitgehalten werden können, können andere Haushaltsgeräte oder Einrichtungen von anderen Haushaltsgeräten bedient werden. Alternativ oder ergänzend kann eine Information beispielsweise über einen Zustand des anderen Haushaltsgeräts durch die Benutzeroberfläche angezeigt werden. Um dies leisten zu können, umfasst die Küchenmaschine die Steuereinheit, die Kommunikationseinheit und die wenigstens eine Schnittstelle für ein Verbinden der Küchenmaschine mit einem anderen Haushaltsgerät. Soll ein der Küchenmaschine bisher unbekanntes Haushaltsgerät über die Küchenmaschine bedient werden, so kann der Steuereinheit ein Steuerprogramm für das bisher unbekannte Haushaltsgerät hinzugefügt werden. Der Kommunikationseinheit kann ein Kommunikationskanal hinzugefügt werden, über den eine Kommunikation zwischen der Küchenmaschine und dem bisher unbekannten Haushaltsgerät ermöglicht wird. Im Vergleich zum eingangs beschriebenen Stand der Technik ist es möglich, eine Küchenmaschine auch für ein Bedienen von anderen Haushaltsgeräten einzusetzen oder nachzurüsten, ohne dafür einen übermäßig großen technischen Aufwand betreiben zu müssen. Indem Benutzeroberflächen genutzt werden, die durch die Küchenmaschine bereitgestellt werden, können Benutzeroberflächen mit geringem technischen Aufwand vereinheitlicht werden, was die Handhabung auch von bisher unbekannten Haushaltsgeräten vereinfachen kann. Ist ein Benutzer mit der Küchenmaschine vertraut, so reduziert sich dadurch für den Benutzer der Lernaufwand, wenn er seinem Haushalt ein weiteres Haushaltsgerät hinzufügen möchte. Auch reduziert sich dadurch die Zahl der Geräte oder Einrichtungen, durch die Benutzeroberflächen für eine Bedienung bereitgestellt werden müssen.

Der Gegenstand des Patentanspruchs 1 ermöglicht es, dass die Küchenmaschine zur Steuerung von anderen Haushaltsgeräten eingesetzt werden kann. Es ist so möglich, den Betrieb der Küchenmaschine mit dem Betrieb eines anderen Haushaltsgerätes zu koordinieren. Dies kann beispielsweise für die Zubereitung einer Mahlzeit genutzt werden, die aus verschiedenen Speisen besteht. Die Küchenmaschine kann ganz oder überwiegend eine erste Speise herstellen. Das andere Haushaltsgerät kann ganz oder überwiegend eine zweite Speise herstellen. Die Küchenmaschine kann die Herstellung der beiden Speisen so steuern, dass der für die Herstellung der Speisen erforderliche Zeitaufwand minimiert wird. Außerdem kann die Küchenmaschine die Herstellung der Speisen so steuern, dass diese zeitgleich oder im Wesentlichen zeitgleich fertiggestellt werden.

Die Küchenmaschine kann darüber hinaus wie eingangs beschrieben ganz oder teilweise wie die aus dem Stand der Technik bekannte Küchenmaschine Thermomix^{®} beschaffen sein. Es kann also zusätzlich eine nativ mit einer Waage der Küchenmaschine fest verknüpfte grafische Benutzeroberfläche (user interface) auf dem Bildschirm der Küchenmaschine Thermomix^{®} dargestellt werden, wenn die Funktion der Waage aktiviert wird. Die grafische Benutzeroberfläche für die Waage der Küchenmaschine und das für die Waage eingesetzte Steuerprogramm können also nach wie vor eine native Einheit bilden. Entsprechendes gilt für weitere Einrichtungen der Küchenmaschine wie Rührwerkzeug und Heizeinrichtung. In diesem Fall gibt es also auch Verknüpfungen zwischen Benutzeroberflächen und Einrichtungen der Küchenmaschine, die technisch unabhängig von der Benutzeroberflächeneinheit, Steuereinheit und Kommunikationseinheit sind. Diese Verknüpfungen beziehen sich also nicht auf ein anderes Haushaltsgerät. Es ist aber auch möglich, technisch die Küchenmaschine so zu bedienen und zu steuern, wie dies mit anderen Haushaltsgeräten geschieht. Eine native Programmierung mit festen Verknüpfungen zwischen Steuerprogramm und Benutzeroberflächen ist also nicht erforderlich.

In einer vorteilhaften Ausgestaltung umfasst die Küchenmaschine eine Verknüpfungseinheit, die so eingerichtet ist, dass diese eine Verknüpfung zwischen einer Benutzeroberfläche der Benutzeroberflächeneinheit, einem Steuerprogramm der Steuereinheit und/oder einen Kommunikationskanal der Kommunikationseinheit herstellt.

Regelmäßig ist es möglich, mithilfe von Copy & Paste ein Steuerprogramm mit einer Benutzeroberfläche und einem Kommunikationskanal zu verknüpfen.

Die Verknüpfungseinheit kann in Form einer HTML realisiert sein. Die HTML Seite umfasst dann grundsätzlich drei Funktionen. Die HTML-Seite stellt als erste Funktion eine grafische Abbildung dar, die der Benutzer betrachtet. Die grafische Abbildung ist dann die Benutzeroberfläche. Über die grafische Abbildung kann dann das andere Haushaltsgerät beispielsweise bedient werden und/oder es werden ein oder mehrere Betriebsparameter des anderen Haushaltsgeräts angezeigt. Die HTML-Seite umfasst dann als zweite Funktion das Bereitstellen eines ausgesuchten Kommunikationskanals. Es wird also durch die HTML - Seite festgelegt, mit welchem anderen Haushaltsgeräten kommuniziert werden kann. Die HTML-Seite umfasst dann als dritte Funktion das Bereitstellen eines ausgesuchten Steuerprogramms. Es wird also durch die HTML - Seite festgelegt, mit welchem anderen Steuerprogramm das andere Haushaltsgerät gesteuert und/oder bedient wird.

Durch den getrennten Aufbau ist es möglich, die einzelnen Funktionen separat zu bearbeiten. So kann das Steuerprogramm unabhängig von den anderen beiden Bereichen programmiert werden. Dadurch ist es leicht möglich, ein anderes Haushaltsgerät zu implementieren.

In einer vorteilhaften Ausgestaltung hält die Benutzeroberflächeneinheit der Küchenmaschine eine Mehrzahl von Benutzeroberflächen bereit, die ausgewählt sind aus:
Benutzeroberfläche für eine Waage,
Benutzeroberfläche für eine Rührgeschwindigkeit eines Rührwerkzeugs,
Benutzeroberfläche für eine Temperatur in einem Speisenzubereitungsraum,
Benutzeroberfläche für eine Zeitdauer,
Benutzeroberfläche für einen Zeitpunkt,
Benutzeroberfläche für einen Ventilator,
Benutzeroberfläche für die Leistung einer Infrarotheizung,
Benutzeroberfläche für die Leistung einer Mikrowellenstrahlung.

Es stehen damit ein oder mehrere Benutzeroberflächen zur Verfügung, die es ermöglichen, ein anderes Haushaltsgerät oder zumindest eine Einrichtung eines anderen Haushaltsgeräts zu bedienen. Alternativ oder ergänzend kann eine Information beispielsweise über einen Zustand des anderen Haushaltsgeräts durch die Benutzeroberfläche angezeigt werden.

In einer Ausgestaltung verknüpft eine Verknüpfungseinheit eine erste Benutzeroberfläche mit einem ersten Steuerprogramm und einem ersten Kommunikationskanal. Außerdem verknüpft eine Verknüpfungseinheit die erste Benutzeroberfläche mit einem zweiten Steuerprogramm und einem zweiten Kommunikationskanal. Eine erste Benutzeroberfläche wird also doppelt genutzt. Dies verringert den technischen Aufwand zur Herstellung. Außerdem kann die Bedienung und/oder Steuerung so vereinheitlicht werden, was den Lernaufwand für einen Benutzer geringhält.

In einer Ausgestaltung der Erfindung umfasst die Küchenmaschine ein Steuerprogramm für die Küchenmaschine und außerdem ein oder mehrere Steuerprogramme, die ausgewählt sind aus:
Steuerprogramm für eine Küchenmaschine umfassend eine Bratpfanne,
Steuerprogramm für eine Mikrowelle,
Steuerprogramm für eine Kaffeemaschine,
Steuerprogramm für einen Backofen,
Steuerprogramm für eine Waschmaschine,
Steuerprogramm für einen Trockner.

Entsprechend dem Steuerprogramm, welches zusätzlich zu dem Steuerprogramm für die Küchenmaschine ausgewählt worden ist, kann eine Küchenmaschine umfassend eine Bratpfanne, eine Mikrowelle, eine Kaffeemaschine, ein Backofen, eine Waschmaschine und/oder ein Trockner gesteuert und/oder bedient und/oder ein entsprechender Zustand angezeigt werden.

In einer Ausgestaltung der Erfindung hält die Kommunikationseinheit ein oder mehrere Kommunikationskanäle bereit, die ausgewählt sind aus:
Kommunikationskanal für eine Küchenmaschine umfassend eine Bratpfanne,
Kommunikationskanal für eine Mikrowelle,
Kommunikationskanal für eine Kaffeemaschine,
Kommunikationskanal für einen Backofen,
Kommunikationskanal für eine Waschmaschine,
Kommunikationskanal für einen Trockner.

Entsprechend dem ausgewählten Kommunikationskanal kann die Küchenmaschine mit einer anderen Küchenmaschine umfassend eine Bratpfanne, mit einer Mikrowelle, mit einer Kaffeemaschine, mit einem Backofen, mit einer Waschmaschine oder mit einem Trockner Daten und damit Informationen austauschen.

Die Küchenmaschine umfasst einen Bildschirm zur optischen Wiedergabe einer Benutzeroberfläche. Die Küchenmaschine ist so eingerichtet, dass diese auf dem Bildschirm eine Benutzeroberfläche für die Küchenmaschine und eine Benutzeroberfläche für das andere Haushaltsgerät darstellen kann. Die Benutzeroberfläche für die Küchenmaschine kann beispielsweise zeitgleich mit der Benutzeroberfläche für das andere Haushaltsgerät auf dem Bildschirm dargestellt werden. Wird auf dem Bildschirm eine Benutzeroberfläche für die Küchenmaschine dargestellt, dann schließt dies nicht aus, das darüber hinaus noch andere Informationen auf dem Bildschirm dargestellt werden. In einer Ausgestaltung der Erfindung werden unterschiedliche Benutzeroberflächen nur abwechselnd auf dem Bildschirm dargestellt, um den Bildschirm nicht zu sehr mit Informationen und Bedienmöglichkeiten zu überfrachten.

Eine Benutzeroberfläche im Sinne der vorliegenden Erfindung umfasst auch den Fall, dass eine Steuerung über Sprache und/oder Gesten erfolgt und/oder dass ein Nutzer der Küchenmaschine Informationen akustisch über einen Lautsprecher erhält.

In einer vorteilhaften Ausgestaltung der Erfindung ist die Küchenmaschine so eingerichtet, dass diese eine Speise zumindest teilautomatisiert zubereiten kann und dass diese das andere Haushaltsgerät so steuern kann, dass das andere Haushaltsgerät eine Speise zumindest teilautomatisiert zubereiten kann. In dieser Ausgestaltung trägt die Küchenmaschine daher nicht nur dafür Sorge, dass Betriebsparameter der Küchenmaschine automatisiert eingestellt werden, sondern darüber hinaus trägt die Küchenmaschine auch dafür Sorge, dass Betriebsparameter des anderen Haushaltsgeräts automatisiert eingestellt werden. Werden zwei verschiedene Speisen hergestellt, so basieren die Einstellungen auf Rezepten, auf die die Küchenmaschine zugreifen kann.

In einer vorteilhaften Ausgestaltung der Erfindung ist die Küchenmaschine so eingerichtet, dass zeitgleich oder zeitlich überlappend Speisen durch die Küchenmaschine und das andere Haushaltsgerät zumindest teilautomatisiert zubereitet werden können. Durch diese Ausgestaltung ist es möglich, eine Mahlzeit, die mehrere Speisen umfasst, mit geringem Zeitaufwand zuzubereiten,

In einer vorteilhaften Ausgestaltung der Erfindung ist die Küchenmaschine so eingerichtet, dass diese ein Rezept für die Zubereitung einer Speise in der Küchenmaschine und ein Rezept für die Zubereitung einer Speise in dem anderen Haushaltsgerät verarbeiten kann. Ein Rezept umfasst insbesondere mehrere Rezeptschritte, die für die Herstellung einer Speise sukzessive abgearbeitet werden. Ein Rezept umfasst als Rezeptschritt insbesondere die Zugabe einer Zutat in den zugehörigen Speisenzubereitungsraum. Ein Rezept umfasst als Rezeptschritt insbesondere das Rühren und/oder Zerkleinern einer Speise oder wenigstens einer Zutat einer Speise und zwar vorzugsweise für einen festgelegten Zeitraum und/oder vorzugsweise mit einer festgelegten Drehgeschwindigkeit des Rührwerkzeugs. Vorzugsweise wird der festgelegte Zeitraum automatisiert durch die Küchenmaschine eingestellt. Vorzugsweise wird die Drehgeschwindigkeit automatisiert durch die Küchenmaschine eingestellt. Ein Rezept umfasst als Rezeptschritt insbesondere das Erwärmen einer Speise oder wenigstens das Erwärmen einer Zutat einer Speise und zwar vorzugsweise für einen festgelegten Zeitraum und/oder vorzugsweise mit einer festgelegten Temperatur. Vorzugsweise wird der festgelegte Zeitraum automatisiert durch die Küchenmaschine eingestellt. Vorzugsweise wird die Temperatur automatisiert durch die Küchenmaschine eingestellt. Ein Rezept umfasst als Rezeptschritt insbesondere das Wenden einer Speise oder einer Zutat der Speise. Eine Speise kann beispielsweise ein Steak oder ein anderes Stück Fleisch umfassen. Als Rezeptschritt kann dann vorgesehen sein, das Fleischstück auf eine andere Seite zu drehen.

Die Küchenmaschine umfasst in einer Ausgestaltung ein Rührwerkzeug für ein Rühren und/oder Zerkleinern einer Speise in dem Speisenzubereitungsraum, eine Waage für ein Wiegen einer in den Speisenzubereitungsraum eingefüllten Zutat und/oder eine Heizeinrichtung für ein Erwärmen des Speisenzubereitungsraums.

Die Erfindung betrifft außerdem ein System umfassend die erfindungsgemäße Küchenmaschine und das andere Haushaltsgerät, wobei das andere Haushaltsgerät vorzugsweise eine Kochstelle und eine Pfanne umfasst. Durch dieses System stehen die wichtigsten Geräte zur Verfügung, die für eine Zubereitung einer Mahlzeit üblicherweise benötigt werden. Dies gilt vor allem dann, wenn die Küchenmaschine ein Rührwerkzeug für ein Rühren und/oder Zerkleinern einer Speise in dem Speisenzubereitungsraum, eine Waage für ein Wiegen einer in den Speisenzubereitungsraum eingefüllten Zutat und eine Heizeinrichtung für ein Erwärmen des Speisenzubereitungsraums umfasst.

Andere Beispiele für Haushaltsgeräte, die das System umfassen kann, sind Waschmaschine für ein Waschen von Wäsche, Trockner für ein Trocknen von feuchter Wäsche, Spülmaschine für ein Reinigen von Geschirr, Töpfen, Pfannen und Besteck, Mikrowelle für ein Erhitzen einer Speise in einem Speisenzubereitungsraum mittels Mikrowellen, Backofen für ein Erhitzen einer Speise in einem Speisenzubereitungsraum mittels Infrarotstrahlung, Dampfgarer für ein Zubereiten einer Speise mittels Wasserdampf, Kochfeld für ein Erhitzen von Töpfen oder Pfannen und darin befindliche Speisen, Kaffeemaschine für ein Zubereiten eines kaffeehaltigen Getränks, Teemaschine für die Zubereitung eines Teegetränks, Kühlschrank für ein Kühlen von Nahrungsmitteln, Tiefkühlschrak für ein Einfrieren von Nahrungsmitteln, Staubsauger für ein Reinigen durch Aufsaugen von Partikeln, Nassreiniger für ein Reinigen mittels einer Flüssigkeit, Dampfreiniger für ein Reinigen mittels Dampf, Eierkocher für ein Kochen von Eiern oder Waffeleisen für die Zubereitung von Waffeln in einem Speisezubereitungsraum.

Die Erfindung betrifft außerdem ein Verfahren zur Herstellung einer Mahltzeit gemäß dem Anspruch 14. Ein Benutzer wählt mithilfe einer erfindungsgemäßen Küchenmaschine ein Rezept für eine erste Speise und ein Rezept für eine zweite Speise aus. Die Küchenmaschine kann beispielsweise eine Liste auf einem Bildschirm darstellen, aus denen die erste Speise und die zweite Speise ausgewählt werden können. Das Rezept für die erste Speise und die zweite Speise können in einem Speicher der Küchenmaschine gespeichert sein. Die Küchenmaschine kann aber beispielsweise auch solche Rezepte über das Internet beziehen und darstellen. Die beiden ausgewählten Rezepte werden für die Küchenmaschine und ein anderes Haushaltsgerät so optimiert, dass die beiden Speisen koordiniert durch die Küchenmaschine und das andere Haushaltsgerät zubereitet werden können und zwar insbesondere zeitlich aufeinander abgestimmt, sodass beide Speisen beispielsweise zu einem gewünschten Zeitpunkt fertiggestellt werden können. Die Optimierung der beiden Rezepte kann durch einen Rezeptplanungsalgorithmus erfolgen. Der Rezeptplanungsalgorithmus kann in der Küchenmaschine gespeichert sein. Der Rezeptplanungsalgorithmus kann aber auch im Internet hinterlegt sein. Eine Optimierung kann aber auch bereits in einem Speicher der Küchenmaschine oder im Internet hinterlegt sein,

Alternativ kann ein Benutzer ein Rezept für eine Mahlzeit umfassend ein Rezept für eine erste Speise und ein Rezept für eine zweite Speise auswählen. Grundsätzlich sind die beiden Rezepte für die Herstellung der ersten Speise und der zweiten Speise dann bereits geeignet koordiniert, um in optimierter Weise beide Speisen aufeinander abgestimmt herstellen zu können und zwar durch die Küchenmaschine und durch das andere Haushaltsgerät.

Werden die beiden Speisen zubereitet, weil beispielsweise der Benutzer einen Startknopf auf einem berührungsempfindlichen Bildschirm betätigt hat, so bearbeitet die Küchenmaschine nacheinander Rezeptschritte für die erste Speise und für die zweite Speise in aufeinander abgestimmten Weise. Die Bearbeitung eines Rezeptschritts erfolgt in der bekannten Weise. So kann ein Benutzer durch einen Rezeptschritt auffordert werden, eine Zutat in einen Speisenzubereitungsraum zu bringen. Ein Rezeptschritt kann aber auch umfassen, dass teilautomatisiert Zutaten für eine Speise in einem Speisenzubereitungsraum der Küchenmaschine oder des anderen Haushaltsgerätes bearbeitet, so zum Beispiel erhitzt, werden. Die erste Speise kann beispielsweise ganz oder überwiegend durch die Küchenmaschine zubereitet werden. Die zweite Speise kann ganz oder überwiegend durch das andere Haushaltsgerät zubereitet werden. Es wird durch die Abstimmung zwischen den beiden Rezepten zur Zubereitung von Speisen zumindest teilweise zeitlich parallel zubereitet.

Vorzugsweise wird eine Küchenmaschine eingesetzt, um ein anderes Haushaltsgerät darüber bedienen und steuern zu können. Von dem Begriff Küchenmaschine ist auch der Fall umfasst, dass zur Küchenmaschine ein damit zum Beispiel drahtlos verbundener Computer gehört. Der Computer kann beispielsweise ein Tablet-PC sein. Grafische Benutzeroberflächen können dann auf dem Bildschirm des Computers dargestellt werden, um die Küchenmaschine sowie ein anderes Haushaltsgerät zu steuern, zu bedienen und/oder um Betriebszustände anzuzeigen. Es muss sich aber nicht zwingend um eine Küchenmaschine handeln, welches ein anderes Haushaltsgerät steuern und bedienen kann. Es kann sich also anstelle der Küchenmaschine beispielsweise auch um eine Waschmaschine handeln. Dies macht aber in vielen Fällen weniger Sinn, da eine Waschmaschine in der Regel vergleichsweise selten benutzt wird und häufig in einem Kellerraum untergebracht ist. Auch im Fall des anderen Haushaltsgeräts kann es sich um eine Kombination aus einem Gerät und einem damit verbundenen Computer handeln, wobei die Verbindung drahtlos sein kann.

Durch die Erfindung wird ein koordiniertes Kochen bzw. Zubereiten von Speisen möglich. Dies gelingt durch Einsatz einer erfindungsgemäßen Küchenmaschine und eines anderen Haushaltsgeräts. Zunächst können geeignete Rezepte ausgewählt und für die die Küchenmaschine und das andere Haushaltsgerät optimiert werden. Die Optimierung kann über das Internet und damit durch einen externen Computer erfolgen Die Optimierung kann durch die Küchenmaschine erfolgen. Die für die Zubereitung von Speisen vorhandenen Geräte können manuell zum Beispiel durch den Benutzer der Küchenmaschine angegeben werden. Die Küchenmaschine kann aber auch so eingerichtet sein, dass diese automatisch bestimmt, welche anderen Haushaltsgeräte für die Zubereitung einer Speise zur Verfügung stehen. Wird die Küchenmaschine durch eine native Programmierung gesteuert, so können auf einem Bildschirm der Küchenmaschine Benutzeroberflächen, die allein auf der nativen Programmierung beruhen, und Benutzeroberflächen einer HTML Seite angezeigt werden. Für einen Benutzer ist dieser technische Unterschied allerdings nicht sichtbar. Eine native Programmierung ist allerdings nicht zwingend erforderlich.

Wird HTML verwendet, so kann die HTML-Seite Anweisungen für das andere Haushaltsgerät umfassen sowie Anweisungen für den Verbindungsaufbau, falls der Verbindungsaufbau nicht vorher über die Küchenmaschine an geeigneter Stelle erfolgt ist. Ein Verbindungsaufbau kann beispielsweise über Bluetooth erfolgen. Programmiertechnisch kann die HTML-Seite so aufgebaut sein, dass ihre drei Funktionen, die eine Benutzeroberfläche, ein Steuerprogramm und einen Kommunikationskanal betreffen, so voneinander getrennt sind, dass die einzelnen Bereiche der Funktionen separat bearbeitet und programmiert werden können.

Nachfolgend wird die Erfindung mithilfe von Figuren näher erläutert. Der Schutzbereich der Patentansprüche ist nicht auf die in den Figuren gezeigten Beispiele eingeschränkt.

Es zeigen:
Figur 1: Schematische Darstellung einer Küchenmaschine;
Figur 2: Aufbau von Einheiten;
Figur 3: andere Haushaltsgeräte.

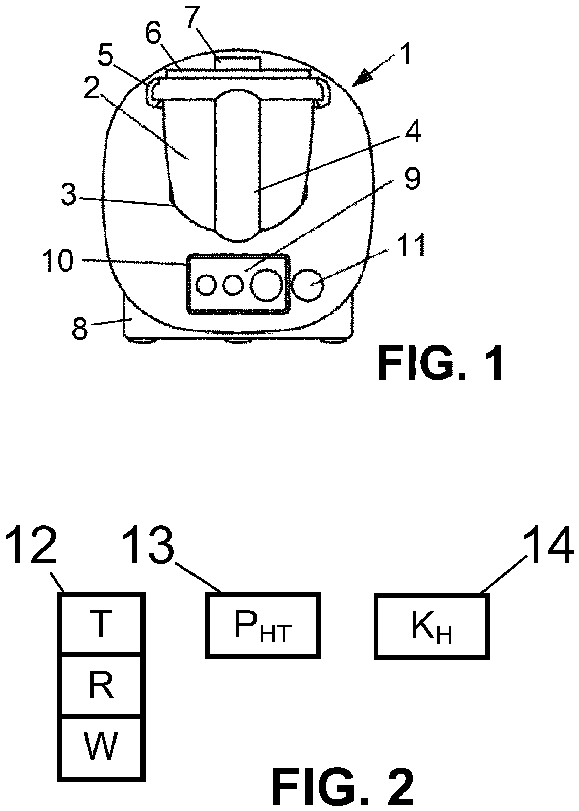

Die Figur 1 zeigt eine Küchenmaschine 1. Die Küchenmaschine 1 umfasst als Speisenzubereitungsraum ein Gefäß 2, welches in eine Halterung 3 der Küchenmaschine 1 eingesetzt ist. Das Gefäß 2 umfasst einen Griff 4, um das Gefäß 2 aus der Halterung 3 leicht entfernen zu können. Die Küchenmaschine umfasst einen Schließmechanismus mit schwenkbar gelagerten Armen 5. In der in der Figur 1 gezeigten Schließstellung umschließen die Arme 5 einen Deckel 6. Dadurch ist der Deckel 6 dann fest mit dem Gefäß 2 verbunden. Der Deckel 6 umfasst eine Öffnung, in welches ein transparentes Gefäß 7 eingesetzt ist. Durch das Gefäß 7 ist die Öffnung in dem Deckel 6 verschlossen. Das transparente Gefäß 7 kann jederzeit von der Öffnung abgehoben werden, sodass dann eine Öffnung bereitstellt ist, durch die hindurch eine Zutat in das Gefäß 2 eingefüllt werden kann. Das transparente Gefäß 7 kann als Dosierhilfe dienen. Wird der Schließmechanismus geöffnet, dann kann der Deckel 6 vom Gefäß 2 entfernt werden. Die Küchenmaschine 1 umfasst für ein Aufstellen ein Fußteil 8.

Eine Benutzeroberfläche 9 wird auf einem Bildschirm 10 dargestellt. Der Bildschirm 10 ist vorzugsweise berührungsempfindlich, um beispielsweise Betriebsparameter durch Berühren des Bildschirms einstellen zu können. Die Küchenmaschine kann zusätzlich beispielsweise einen Drehregler 11 umfassen, der ebenfalls dazu dienen kann, im Zusammenspiel mit der Benutzeroberfläche 9 ein oder mehrere Betriebsparameter einstellen zu können. Bezieht sich die Benutzeroberfläche 9 beispielsweise auf eine Rühreinrichtung der Küchenmaschine 1 oder aber auf die Rühreinrichtung eines anderen Haushaltsgeräts, so kann mit dem Drehregler 11 beispielsweise eine Drehgeschwindigkeit eingestellt werden. Bezieht sich die Benutzeroberfläche 9 beispielsweise auf ein Erwärmen des Gefäßes 2 der Küchenmaschine 1 oder auf das Erwärmen eines Speisenzubereitungsraums eines anderen Haushaltsgeräts, so kann der Drehregler 11 beispielsweise dazu dienen, um eine gewünschte Temperatur einzustellen. Es kann also von Vorteil sein, die Küchenmaschine 1 oder ein anderes Haushaltsgerät nicht vollständig über eine Benutzeroberfläche zu bedienen und zu steuern, die durch eine Benutzeroberflächeneinheit der Küchenmaschine 1 bereitgestellt wird. Anstelle eines Drehreglers kann aber beispielsweise auch ein Schieberegler vorgesehen sein, bei dem also durch eine Schiebbewegung Betriebsparameter wie Temperatur, Rührgeschwindigkeit oder eine Zeitdauer eingestellt werden können. Ein Drehregler 11 ist allerdings zu bevorzugen, da große Bereiche eingestellt werden können, ohne dafür übermäßig viel Platz bereitstellen zu müssen. Der Drehregler kann alternativ oder ergänzend als Druckelement ausgestaltet sein. Unter einem Druckelement ist zu verstehen, dass dieses gedrückt werden kann, um eine Aktion auszulösen, so zum Beispiel einen Start einer Zubereitung von ein oder mehreren Speisen.

Die in der Figur 1 gezeigte Küchenmaschine 1 umfasst eine Schnittstelle für ein Verbinden der Küchenmaschine 1 mit einem anderen Haushaltsgerät. Die in der Figur 1 gezeigte Küchenmaschine 1 ist so eingerichtet, dass auf dem Bildschirm 10 eine HTML-Seite dargestellt werden kann. Die Küchenmaschine 1 kann also HTML verarbeiten.

Wie in der Figur 2 dargestellt, umfasst die Küchenmaschine 1 eine Benutzeroberflächeneinheit 12 für ein Bereithalten von drei verschiedenen Benutzeroberflächen T, R und W. Die Küchenmaschine 1 umfasst eine Steuereinheit 13 für ein Bereithalten eines Steuerprogramms P_{HT}. Die Küchenmaschine 1 umfasst eine Kommunikationseinheit 14 für ein Bereithalten von einem Kommunikationskanal K_{H}.

Die Benutzeroberfläche T ermöglicht das Einstellen einer Temperatur für einen Speisenzubereitungsraum. So kann beispielsweise eine Temperatur von 50 °C eingestellt werden. Der Speisenzubereitungsraum wird dann auf 50° erwärmt. Es kann außerdem eine Zeitdauer eingestellt werden. Werden beispielsweise 10 Minuten eingestellt, so wird der Speisenzubereitungsraum 10 Minuten lang erwärmt. Das Einstellen der Temperatur und/oder der Zeitdauer kann durch Betätigen der grafischen Benutzeroberfläche T erfolgen, die auf dem zumindest dann berührungsempfindlichen Bildschirm 10 dargestellt wird. Es ist aber auch möglich, dass mit der Darstellung der Benutzeroberfläche T auf dem Bildschirm 10 einhergeht, dass Temperatur und/oder Zeitdauer beispielsweise mithilfe des Drehreglers 11 eingestellt werden können.

Die Benutzeroberfläche R ermöglicht das Einstellen einer Rührgeschwindigkeit für ein Rührwerkzeug in einem Speisenzubereitungsraum. So kann beispielsweise eine Rührgeschwindigkeit der Stufe 5 von 10 möglichen Stufen eingestellt werden. Das Rührwerkzeug wird dann der Stufe 5 entsprechend schnell gedreht. Es kann außerdem eine Zeitdauer eingestellt werden. Werden beispielsweise 10 Sekunden eingestellt, so wird das Rührwerkzeug 10 Sekunden lang gedreht. Das Einstellen der Rührgeschwindigkeit und/oder der Zeitdauer können durch die grafische Benutzeroberfläche R ermöglicht werden, die auf dem Bildschirm 10 dargestellt wird. Es ist aber auch möglich, dass mit der Darstellung der Benutzeroberfläche R auf dem Bildschirm 10 einhergeht, dass Temperatur und/oder Zeitdauer beispielsweise mithilfe des Drehreglers 11 eingestellt werden können.

Die Benutzeroberfläche W ermöglicht das Verwenden einer Waage, um das Gewicht von Zutaten zu wiegen, die nach der Aktivierung der Waage in einen Speisenzubereitungsraum gebracht werden. Die grafische Benutzeroberfläche W kann auf dem Bildschirm 10 dargestellt werden. Auf der grafischen Benutzeroberfläche W kann das Gewicht einer in den Speisenzubereitungsraum gebrachten Zutat angezeigt werden.

Durch das Steuerprogramm P_{HT}, welches die Steuereinheit 12 bereithält, kann die Temperatur für einen Speisenzubereitungsraum eines anderen Haushaltsgeräts gesteuert eingestellt werden. Das andere Haushaltsgerät H ist beispielsweise ein Kochfeld mit einer Pfanne.

Durch den Kommunikationskanal K_{H}, den die Kommunikationseinheit 14 bereitstellt, kann die Küchenmaschine 1 mit dem anderen Haushaltsgerät H kommunizieren.

Zusätzlich zu den Benutzeroberflächen T, R und W kann es eine Benutzeroberfläche geben, die das Aussuchen von Rezepten aus einer Liste von Rezepten ermöglicht. Ein Benutzer kann nach Aufruf dieser Benutzeroberfläche aus einer Liste beispielsweise ein erstes Rezept für die Küchenmaschine und ein zweites Rezept für das andere Haushaltsgerät auswählen. Im Anschluss an die Auswahl kann der Benutzer die Zubereitung gemäß den beiden ausgewählten Rezepten aktivieren. Die Küchenmaschine kann nun so eingerichtet sein, dass die beiden Rezepte aufeinander abgestimmt abgearbeitet werden. Gemäß einem ersten Rezeptschritt des ersten Rezepts muss beispielsweise eine erste Zutat in den Speisenzubereitungsraum 2 der Küchenmaschine 1 eingefüllt werden. Es erscheint daher auf dem Bildschirm 10 der Küchenmaschine 1 die Benutzeroberfläche W für die Waage. Der Benutzer füllt nun die erste Zutat in den Speisenzubereitungsraum 2 der Küchenmaschine 1 ein. Ist die erste Zutat in der nach dem ersten Rezept vorgegebenen Menge eingefüllt worden, so erkennt dies die Küchenmaschine 1 automatisiert. Es kann dann beispielsweise ein zweiter Rezeptschritt des ersten Rezepts auf dem Bildschirm 10 dargestellt werden. Gemäß dem zweiten Rezeptschritt kann vorgesehen sein, eine zweite Zutat in der nach dem ersten Rezept vorgegebenen Menge in den Speisenzubereitungsraum 2 einzufüllen. Dies geschieht dann wie bei der ersten Zutat. Erkennt die Küchenmaschine 1, dass die zweite Zutat vollständig eingefüllt worden ist, so kann nun gemäß einem dritten Rezeptschritt vorgesehen sein, dass nun die beiden Zutaten miteinander zu mischen sind, beispielsweise bei der Stufe 4 für 10 Sekunden. Es kann nun auf dem Bildschirm 10 die Benutzeroberfläche R dargestellt werden, über die der Benutzer bestätigen kann, dass nun bei der Stufe 4 für 10 Sekunden gerührt werden soll. Es kann aber auch sein, dass eine ausdrückliche Bestätigung durch den Benutzer nicht erforderlich ist. Es kann also sein, dass nach dem vollständigen Einfüllen der zweiten Zutat die Küchenmaschine 1 automatisiert bei der Stufe 4 für 10 Sekunden mithilfe ihres Mischwerkzeugs rührt.

Es kann nun erforderlich sein, die Pfanne des anderen Haushaltsgeräts zu erhitzen. Gesteuert durch den ersten Rezeptschritt des zweiten Rezepts wählt die Küchenmaschine 1 nun das Steuerprogramm P_{HT} und den Kommunikationskanal K_{H} aus. Es kann nun gesteuert durch den ersten Rezeptschritt des zweiten Rezepts auf dem Bildschirm 10 der Küchenmaschine 1 die Benutzeroberfläche T dargestellt werden. Zusätzlich dazu kann auf dem Bildschirm 10 ein Hinweis erscheinen, dass nun das andere Haushaltsgerät betroffen ist. Der Benutzer kann nun aufgefordert werden zu bestätigen, dass die Pfanne, also der Speisenzubereitungsraum, des anderen Haushaltsgeräts erhitzt werden soll. Wird dies durch den Benutzer bestätigt, so veranlasst die Küchenmaschine 1, dass die Pfanne gemäß dem Steuerprogramm P_{HT} auf die Temperatur gebracht wird, die gemäß dem ersten Rezeptschritt des zweiten Rezepts vorgesehen ist. Es kann aber auch sein, dass die Küchenmaschine 1 veranlasst durch den ersten Rezeptschritt des zweiten Rezepts das Steuerprogramm P_{HT} und den Kommunikationskanal K_{H} auswählt und im Anschluss daran das andere Haushaltgerät durch die Küchenmaschine 1 veranlasst wird, die Pfanne gemäß dem ersten Rezeptschritt des zweiten Rezepts zu erhitzen.

Die weiteren Rezeptschritte der beiden Rezepte werden nun sukzessive in einer aufeinander abgestimmten Reihenfolge abgearbeitet, bis schließlich durch die Küchenmaschine 1 und das andere Haushaltsgerät die jeweilige Speise zubereitet ist. Das Beispiel verdeutlicht auch, dass ein Rezeptschritt die Auswahl eines Steuerprogramms und eines Kommunikationskanals umfassen kann, um ein gewünschtes anderes Haushaltsgerät zu steuern.

Der Benutzeroberflächeneinheit 12 ist so eingerichtet, dass der Benutzeroberflächeneinheit 12 andere Benutzeroberflächen hinzugefügt werden können. Es ist auch möglich, eine Benutzeroberfläche wieder zu entfernen. Die Steuereinheit 13 ist so eingerichtet, dass der Steuereinheit 13 andere Steuerprogramme hinzugefügt werden können. Es ist auch möglich, ein Steuerprogramm wieder zu entfernen. Die Kommunikationseinheit 14 ist so eingerichtet, dass der Kommunikationseinheit 14 andere Kommunikationskanäle hinzugefügt werden können. Es ist auch möglich, einen Kommunikationskanal wieder zu entfernen. Hierdurch ist es möglich, ein nächstes Haushaltsgerät zu integrieren. Für die Integration eines nächsten Haushaltsgeräts kann es genügen, einen Kommunikationskanal für dieses nächste Haushaltsgerät der Kommunikationseinheit 14 hinzuzufügen und außerdem ein Steuerprogramm zur Steuereinheit 13. Im Anschluss daran kann die Küchenmaschine 1 über die für ein Verbinden vorgesehene Schnittstelle mithilfe des hinzugefügten Steuerprogramms und des hinzugefügten Kommunikationskanals das nächste Haushaltsgerät steuern.

Die Küchenmaschine 1 kann eine in der Küchenmaschine 1 hinterlegte Verknüpfungseinheit umfassen. Durch die hinterlegte Verknüpfungseinheit kann beispielsweise die Benutzeroberfläche T mit dem Steuerprogramm P_{HT} und dem Kommunikationskanal K_{H} verknüpft sein. Die Verknüpfungseinheit kann als HTML - Seite realisiert sein. Das Aufrufen dieser HTML - Seite und damit die Darstellung der HTML - Seite auf dem Bildschirm 10 kann durch ein Rezept erfolgen.

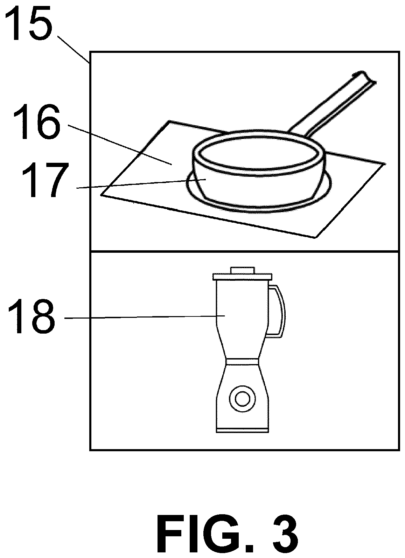

Die Küchenmaschine kann wie beispielhaft in der Figur 3 gezeigt eine Benutzeroberfläche umfassen, durch die eine Liste 15 bereitgestellt wird, aus der integrierte Haushaltsgeräte ausgewählt werden können. Beispielsweise ist ein Haushaltsgerät integriert, welches ein Kochfeld mit einer Pfanne umfasst. In der Liste 15 wird daher ein Kochfeld 16 mit einer Pfanne 17 gezeigt. Beispielsweise ist ein nächstes Haushaltsgerät und zwar eine Teemaschine integriert. Die Liste 15 umfasst daher die Darstellung einer Teemaschine 18.

Wird in einer Ausführungsform aus in der Figur 3 gezeigten Liste das Haushaltsgerät mit dem in der Figur 3 gezeigten Kochfeld 16 und der Pfanne 17 ausgewählt, so kann dies zur Folge haben, dass die vorgenannte hinterlegte Verknüpfung aktiviert wird. Es wird dann auf dem Bildschirm die Benutzeroberfläche T dargestellt. Durch das damit verknüpfte Steuerprogramm P_{HT} und dem damit verknüpften Kommunikationskanal K_{H} kann nun beispielsweise die Temperatur des ausgewählten Haushaltsgeräts mithilfe der Benutzeroberfläche T eingestellt werden.

Wird in einer Ausführungsform aus der in der Figur 3 gezeigten Liste das Haushaltsgerät mit dem in der Figur 3 gezeigten Kochfeld und der Pfanne ausgewählt, so kann dies zur Folge haben, dass zunächst eine weitere Liste angezeigt wird, aus der Beispielsweise T und W zur Auswahl gestellt werden, weil beim anderen Haushaltsgerät mit dem Kochfeld und der Pfanne auch eine Waage integriert ist.

Wird im Anschluss daran beispielsweise die Benutzeroberfläche T ausgewählt, so wird im Anschluss daran die Benutzeroberfläche T auf dem Bildschirm 10 dargestellt. Es kann dann eine Temperatur T bei dem Haushaltsgerät mit dem Kochfeld und der Pfanne manuell eingestellt werden. Entsprechendes gilt bei Auswahl der Benutzeroberfläche W.

## Patentansprüche

1. Küchenmaschine (1) für eine Zubereitung einer Speise, mit einem Speisenzubereitungsraum (2), mit ein oder mehreren Einrichtungen für die Zubereitung der Speise in dem Speisenzubereitungsraum (2), mit wenigstens einer Schnittstelle für ein Verbinden der Küchenmaschine (1) mit einem anderen Haushaltsgerät (16, 17; 18), mit einer Steuereinheit für ein Bereithalten von Steuerprogrammen (P_{HT}), mit einer Kommunikationseinheit für ein Bereithalten von Kommunikationskanälen (K_{H}) **gekennzeichnet durch**
eine Benutzeroberflächeneinheit für ein Bereithalten von Benutzeroberflächen (9) mit einer Benutzeroberfläche (9), durch die das andere Haushaltsgerät (16, 17; 18) bedient werden kann und/oder die einen Zustand des anderen Haushaltsgeräts (16, 17; 18) anzeigen kann, und einen Bildschirm (10) zur Wiedergabe einer Benutzeroberfläche (9), wobei die Küchenmaschine (1) so eingerichtet ist, dass diese auf dem Bildschirm (10) eine Benutzeroberfläche (9) für die Küchenmaschine (1) und die Benutzeroberfläche (9) für das andere Haushaltsgerät (16, 17; 18) darstellen kann.

2. Küchenmaschine (1) nach dem vorhergehenden Anspruch, **dadurch gekennzeichnet, dass** die Küchenmaschine (1) eine Verknüpfungseinheit umfasst, die so eingerichtet ist, dass diese eine Verknüpfung zwischen einer durch die Benutzeroberflächeneinheit bereitgehaltenen Benutzeroberfläche (9), einem durch die Steuereinheit bereitgehaltenem Steuerprogramm (P_{HT}) und/oder einen durch die Kommunikationseinheit bereitgehaltenen Kommunikationskanal (K_{H}) herstellen kann oder herstellt.

3. Küchenmaschine (1) nach einem der vorhergehenden Ansprüche, **dadurch gekennzeichnet, dass** die Verknüpfungseinheit durch eine HTML Seite realisiert ist.

4. Küchenmaschine (1) nach einem der vorhergehenden Ansprüche, **dadurch gekennzeichnet, dass** die Benutzeroberflächeneinheit eine Mehrzahl von Benutzeroberflächen (9) bereithält, die ausgewählt sind aus:
Benutzeroberfläche (W) für eine Waage,
Benutzeroberfläche (R) für eine Rührgeschwindigkeit eines Rührwerkzeugs,
Benutzeroberfläche (T) für eine Temperatur in einem Speisenzubereitungsraum (2),
Benutzeroberfläche für eine Zeitdauer,
Benutzeroberfläche für einen Zeitpunkt,
Benutzeroberfläche für einen Ventilator,
Benutzeroberfläche für die Leistung einer Infrarotheizung,
Benutzeroberfläche für die Leistung einer Mikrowellenstrahlung.

5. Küchenmaschine (1) nach einem der vorhergehenden Ansprüche, **dadurch gekennzeichnet, dass** die Steuereinheit ein Steuerprogramm für die Küchenmaschine (1) bereithält und außerdem ein oder mehrere Steuerprogramme (P_{HT}), die ausgewählt sind aus:
Steuerprogramm für eine Küchenmaschine umfassend eine Bratpfanne (17),
Steuerprogramm für eine Mikrowelle,
Steuerprogramm für eine Kaffeemaschine,
Steuerprogramm für einen Backofen,
Steuerprogramm für eine Waschmaschine,
Steuerprogramm für einen Trockner.

6. Küchenmaschine (1) nach einem der vorhergehenden Ansprüche, **dadurch gekennzeichnet, dass** die Kommunikationseinheit ein oder mehrere Kommunikationskanäle bereithält, die ausgewählt sind aus:
Kommunikationskanal für eine Küchenmaschine umfassend eine Bratpfanne (17),
Kommunikationskanal für eine Mikrowelle,
Kommunikationskanal für eine Kaffeemaschine,
Kommunikationskanal für einen Backofen,
Kommunikationskanal für eine Waschmaschine,
Kommunikationskanal für einen Trockner.

7. Küchenmaschine (1) nach einem der vorhergehenden Ansprüche, **dadurch gekennzeichnet, dass** die Küchenmaschine (1) so eingerichtet ist, dass diese eine Speise teilautomatisiert zubereiten kann und dass diese das andere Haushaltsgerät so steuern kann, dass das andere Haushaltsgerät (16, 17; 18) eine Speise teilautomatisiert zubereiten kann.

8. Küchenmaschine (1) nach einem der vorhergehenden Ansprüche, **dadurch gekennzeichnet, dass** die Küchenmaschine (1) so eingerichtet ist, dass zeitgleich oder zeitlich überlappend Speisen durch die Küchenmaschine (1) und das andere Haushaltsgerät (16, 17; 18) zumindest teilautomatisiert zubereitet werden können.

9. Küchenmaschine (1) nach einem der vorhergehenden Ansprüche, **dadurch gekennzeichnet, dass** die Küchenmaschine (1) so eingerichtet ist, dass diese ein Rezept für die Zubereitung einer Speise in der Küchenmaschine (1) und ein Rezept für die Zubereitung einer Speise in dem anderen Haushaltsgerät (16, 17; 18) verarbeiten kann.

10. Küchenmaschine (1) nach einem der vorhergehenden Ansprüche, **dadurch gekennzeichnet, dass** die Küchenmaschine (1) ein Rührwerkzeug für ein Rühren und/oder Zerkleinern einer Speise in dem Speisenzubereitungsraum (2), eine Waage für ein Wiegen einer in den Speisenzubereitungsraum (2) eingefüllten Zutat und/oder eine Heizeinrichtung für ein Erwärmen des Speisenzubereitungsraums (2) umfasst.

11. Küchenmaschine (1) nach einem der vorhergehenden Ansprüche, **dadurch gekennzeichnet, dass** die Küchenmaschine (1) ein Rezept für eine Mahlzeit umfasst, welches zusammengesetzt ist aus einem Rezept für eine erste Speise und einem Rezept für eine zweite Speise, wobei die beiden Speisen durch die Küchenmaschine (1) und das andere Haushaltsgerät (16, 17; 18) zubereitet werden.

12. Küchenmaschine (1) nach dem vorhergehenden Anspruch, **dadurch gekennzeichnet, dass** die Küchenmaschine (1) so eingerichtet ist, dass das die erste Speise ganz oder überwiegend durch die Küchenmaschine (1) hergestellt wird und die zweite Speise ganz/oder überwiegend durch ein anderes Haushaltsgerät (16, 17; 18).

13. System umfassend eine Küchenmaschine (1) nach einem der vorhergehenden Ansprüche und die andere Küchenmaschine (1), wobei die andere Küchenmaschine (1) eine Kochstelle und eine Pfanne (17) umfasst.

14. Verfahren zur Herstellung einer Mahlzeit mit den Schritten, ein Benutzer wählt mithilfe einer Küchenmaschine (1) nach einem der vorhergehenden Ansprüche ein Rezept für eine erste Speise und ein Rezept für eine zweite Speise oder ein Rezept für eine Mahlzeit umfassend ein Rezept für eine erste Speise und ein Rezept für eine zweite Speise aus, wobei die Küchenmaschine (1) nacheinander Rezeptschritte für die erste Speise und für die zweite Speise bearbeitet, wobei die erste Speise ganz oder überwiegend durch die Küchenmaschine (1) hergestellt wird und/oder die zweite Speise ganz oder überwiegend durch das andere Haushaltsgerät (16, 17; 18).

## Claims

1. A food processor (1) for preparing a food, with a food preparation space (2), with one or more devices for preparing the food in the food preparation space (2), with at least one interface for connecting the food processor (1) to another household appliance (16, 17; 18), with a control unit for providing control programs (P_{HT}) and with a communication unit for providing communication channels (K_{H}), **characterized by** a user interface unit for providing user interfaces (9) with a user interface (9) by which the other household appliance (16; 17; 18) can be operated and/or which is able to display a status of the other household appliance (16; 17; 18), and a screen (10) for displaying a user interface (9), wherein the food processor (1) is configured such that it can display on the screen (10) a user interface (9) for the food processor (1) and a user interface (9) for the other household appliance (16, 17; 18).

2. The food processor (1) according to the preceding claim, **characterized in that** the food processor (1) comprises a linking unit configured such that it can establish or establishes a link between a user interface (9) provided by the user interface unit, a control program (P_{HT}) provided by the control unit and/or a communication channel (K_{H}) provided by the communication unit.

3. The food processor (1) according to one of the preceding claims, **characterized in that** the linking unit is realized by an HTML page.

4. The food processor (1) according to one of the preceding claims, **characterized in that** the user interface unit provides a plurality of user interfaces (9) selected from
User interface (W) for a scale,
User interface (R) for a stirring speed of a stirring tool,
User interface (T) for a temperature in a food preparation space (2),
User interface for a period of time,
User interface for a point in time,
User interface for a fan,
User interface for the power of an infrared heater,
User interface for the power of a microwave radiation.

5. The food processor (1) according to one of the preceding claims, **characterized in that** the control unit provides a control program for the food processor (1) and further provides one or more control programs (P_{HT}) selected from:
Control program for a food processor comprising a frying pan (17),
Control program for a microwave oven,
Control program for a coffee machine,
Control program for an oven,
Control program for a washing machine,
Control program for a dryer.

6. The food processor (1) according to one of the preceding claims, **characterized in that** the communication unit provides one or more communication channels selected from:
Communication channel for a food processor comprising a frying pan (17),
Communication channel for a microwave oven,
Communication channel for a coffee machine,
Communication channel for an oven,
Communication channel for a washing machine,
Communication channel for a dryer.

7. The food processor (1) according to one of the preceding claims, **characterized in that** the food processor (1) is configured such that it can prepare a food in a semi-automated manner and that it can control the other household appliance in such a way that the other household appliance (16, 17; 18) can prepare a food in a semi-automated manner.

8. The food processor (1) according to one of the preceding claims, **characterized in that** the food processor (1) is configured such that food can be prepared in an at least semi-automated manner by the food processor (1) and the other household appliance (16, 17; 18) simultaneously or overlapping in time.

9. The food processor (1) according to one of the preceding claims, **characterized in that** the food processor (1) is configured such that it can process a recipe for the preparation of a food in the food processor (1) and a recipe for the preparation of a food in the other household appliance (16, 17; 18).

10. The food processor (1) according to one of the preceding claims, **characterized in that** the food processor (1) comprises a stirring tool for stirring and/or chopping a food in the food preparation space (2), a scale for weighing an ingredient filled into the food preparation space (2) and/or a heating device for heating the food preparation space (2).

11. The food processor (1) according to one of the preceding claims, **characterized in that** the food processor (1) comprises a recipe for a meal composed of a recipe for a first food and a recipe for a second food, wherein both foods are prepared by the food processor (1) and the other household appliance (16, 17; 18).

12. The food processor (1) according to the preceding claim, **characterized in that** the food processor (1) is configured such that the first food is produced entirely or predominantly by the food processor (1) and the second food is produced entirely or predominantly by another household appliance (16, 17; 18).

13. System comprising a food processor (1) according to one of the preceding claims and the other food processor (1), wherein the other food processor (1) comprises a hob and a pan (17).

14. A method for producing a meal, comprising the steps, a user selects by means of a food processor (1) according to one of the preceding claims a recipe for a first food and a recipe for a second food or a recipe for a meal comprising a recipe for a first food and a recipe for a second food, wherein the food processor (1) successively processes recipe steps for the first food and for the second food, wherein the first food is produced entirely or predominantly by the food processor (1) and/or the second food is produced entirely or predominantly by the other household appliance (16, 17; 18).

## Revendications

1. Machine de cuisine (1) pour la préparation d'un repas, avec un espace de préparation de repas (2), avec un ou plusieurs dispositifs pour la préparation du repas dans l'espace de préparation de repas (2), avec au moins une interface pour une liaison de la machine de cuisine (1) avec un autre appareil ménager (16, 17 ; 18), avec une unité de commande pour une mise à disposition de programmes de commande (P_{HT}), avec une unité de communication pour une mise à disposition de canaux de communication (K_{H}),
**caractérisée par**
une unité d'interface utilisateur pour une mise à disposition d'interfaces utilisateur (9) avec une interface utilisateur (9), par laquelle l'autre appareil ménager (16, 17 ; 18) peut être manipulé et/ou qui peut afficher un état de l'autre appareil ménager (16, 17 ; 18), et un écran (10) pour la reproduction d'une interface utilisateur (9), dans laquelle la machine de cuisine (1) est aménagée de telle sorte qu'elle peut représenter sur l'écran (10) une interface utilisateur (9) pour la machine de cuisine (1) et l'interface utilisateur (9) pour l'autre appareil ménager (16, 17 ; 18).

2. Machine de cuisine (1) selon la revendication précédente, **caractérisée en ce que** la machine de cuisine (1) comprend une unité de liaison aménagée pour pouvoir établir ou pour établir une liaison entre une interface utilisateur (9) mise à disposition par l'unité d'interface utilisateur, un programme de commande (P_{HT}) mis à disposition par l'unité de commande et/ou un canal de communication (K_{H}) mis à disposition par l'unité de communication.

3. Machine de cuisine (1) selon l'une des revendications précédentes, **caractérisée en ce que** l'unité de liaison est réalisée par une page HTML.

4. Machine de cuisine (1) selon l'une des revendications précédentes, **caractérisée en ce que** l'unité d'interface utilisateur met à disposition une pluralité d'interfaces utilisateur (9) qui sont choisies parmi :
interface utilisateur (W) pour une balance,
interface utilisateur (R) pour une vitesse d'agitation d'un outil d'agitation,
interface utilisateur (T) pour une température dans un espace de préparation de repas (2),
interface utilisateur pour une durée temporelle,
interface utilisateur pour un point de temps,
interface utilisateur pour un ventilateur,
interface utilisateur pour la puissance d'un chauffage infrarouge,
interface utilisateur pour la puissance d'un rayonnement micro-ondes.

5. Machine de cuisine (1) selon l'une des revendications précédentes, **caractérisée en ce que** l'unité de commande met à disposition un programme de commande pour la machine de cuisine (1) et met à disposition également un ou plusieurs programmes de commande (P_{HT}) qui sont choisis parmi :
programme de commande pour une machine de cuisine comprenant une poêle à frire (17),
programme de commande pour un four à micro-ondes,
programme de commande pour une machine à café,
programme de commande pour un four,
programme de commande pour une machine à laver,
programme de commande pour un sèche-linge.

6. Machine de cuisine (1) selon l'une des revendications précédentes, **caractérisée en ce que** l'unité de communication met à disposition un ou plusieurs canaux de communication qui sont choisis parmi :
canal de communication pour une machine de cuisine comprenant une poêle à frire (17),
canal de communication pour un four à micro-ondes,
canal de communication pour une machine à café,
canal de communication pour un four,
canal de communication pour un lave-linge,
canal de communication pour un sèche-linge.

7. Machine de cuisine (1) selon l'une des revendications précédentes, **caractérisée en ce que** la machine de cuisine (1) est aménagée de manière à pouvoir préparer un repas de manière partiellement automatisée et **en ce que** celle-ci peut commander l'autre appareil ménager de manière à ce que l'autre appareil ménager (16, 17 ; 18) puisse préparer un repas de manière partiellement automatisée.

8. Machine de cuisine (1) selon l'une des revendications précédentes, **caractérisée en ce que** la machine de cuisine (1) est aménagée de telle sorte que des repas peuvent être préparés de manière au moins partiellement automatisée par la machine de cuisine (1) et l'autre appareil ménager (16, 17 ; 18) simultanément ou en se chevauchant dans le temps.

9. Machine de cuisine (1) selon l'une des revendications précédentes, **caractérisée en ce que** la machine de cuisine (1) est aménagée pour traiter une recette de préparation d'un repas dans la machine de cuisine (1) et une recette de préparation d'un repas dans l'autre appareil ménager (16, 17 ; 18).

10. Machine de cuisine (1) selon l'une des revendications précédentes, **caractérisée en ce que** la machine de cuisine (1) comprend un outil de mélange pour mélanger et/ou broyer un repas dans l'espace de préparation de repas (2), une balance pour peser un ingrédient introduit dans l'espace de préparation de repas (2) et/ou un dispositif de chauffage pour chauffer l'espace de préparation de repas (2).

11. Machine de cuisine (1) selon l'une des revendications précédentes, **caractérisée en ce que** la machine de cuisine (1) comprend une recette pour un plat composée d'une recette pour un premier repas et d'une recette pour un second repas, les deux repas étant préparés par la machine de cuisine (1) et l'autre appareil ménager (16, 17 ; 18).

12. Machine de cuisine (1) selon la revendication précédente, **caractérisée en ce que** la machine de cuisine (1) est aménagée de telle sorte que le premier repas est produit entièrement ou principalement par la machine de cuisine (1) et le deuxième repas est produit entièrement/ou principalement par un autre appareil ménager (16, 17 ; 18).

13. Système comprenant une machine de cuisine (1) selon l'une des revendications précédentes et l'autre machine de cuisine (1), dans lequel l'autre machine de cuisine (1) comprend une plaque de cuisson et une casserole (17).

14. Procédé de préparation d'un plat comprenant les étapes : un utilisateur sélectionne, à l'aide d'une machine de cuisine (1) selon l'une des revendications précédentes, une recette pour un premier repas et une recette pour un deuxième repas ou une recette pour un plat comprenant une recette pour un premier repas et une recette pour un deuxième repas, dans lequel la machine de cuisine (1) traite successivement des étapes de recette pour le premier repas et pour le deuxième repas, dans lequel le premier repas est préparé entièrement ou principalement par la machine de cuisine (1) et/ou le deuxième repas est préparé entièrement ou principalement par l'autre appareil ménager (16, 17 ; 18).
